# EUROPÄISCHE PATENTSCHRIFT

(11) **EP 3 219 383 B1**
(45) Veröffentlichungstag und Bekanntmachung des Hinweises auf die Patenterteilung: **06.11.2019**
(21) Anmeldenummer: 17000399.0
(22) Anmeldetag: 13.03.2017
(51) Int. Cl.: B01J 2/14, A23G 3/26, B05B 13/02, A61J 3/00

(54) **TELLERCOATER ZUM AUFBRINGEN EINER OBERFLÄCHENSCHICHT AUF SCHÜTTGUTARTIGE MATERIALIEN**
DRUM COATER FOR APPLYING A SURFACE LAYER ON PIECE GOOD MATERIALS
COUCHEUSE À TAMBOUR POUR APPLIQUER UNE COUCHE DE SURFACE SUR DES MATÉRIAUX EN VRAC

(30) Priorität: 16.03.2016 DE 102016003170
(43) Veröffentlichungstag der Anmeldung: 20.09.2017
(73) Patentinhaber: Glatt Maschinen- und Apparatebau AG, 4133 Pratteln (CH)
(72) Erfinder: THIES, Jochen, 79540 Lörrach (DE); UEBERSCHLAG, Pascal, 68480 Fislis (FR); KRUMM, Juergen, 79477 Schliengen (DE)
(74) Vertreter: Patentanwälte Magenbauer & Kollegen Partnerschaft mbB

(56) Entgegenhaltungen:
- EP-A1- 2 363 202
- WO-A1-2011/013537

## Beschreibung

### Stand der Technik

Die Erfindung geht aus von einem Trommelcoater nach Anspruch 1.

Trommelcoater und darin verbaute Mischwerkzeuge sind seit langem Stand der Technik. Als ältestes Verfahren zur Beschichtung und Veredelung von Arzneiwirkstoffen ist das Trommelcoating ein echter Klassiker. Schüttgutartige Materialien, wie insbesondere Tabletten, Kapseln oder sehr große Pellets, werden in Trommelcoatern mit einer Oberflächensicht, vorzugsweise Zuckerüberzügen, Lacken und sogar Wirkstoffen überzogen. Die schüttgutartigen Materialien werden hierzu gleichzeitig besprüht, vorzugsweise mit einer Lösung oder Suspension, und mit einem Gas, insbesondere erwärmter Luft, getrocknet. Das Besprühen des schüttgutartigen Materials erfolgt, um eine Oberflächenschicht zu erzeugen, wobei diese entscheidenden Einfluss auf die Wirkstofffreisetzung hat. Des Weiteren erleichtert das Coating dem Patienten außerdem die Einnahme der Produkte und auch ein unangenehmer Geschmack des Wirkstoffs lässt sich durch Coating maskieren. Die gleichzeitige Trocknung ist notwendig, damit das Lösungsmittel aus der aufgesprühten Lösung oder Suspension verdampfen kann und sich die gewünschte Oberflächenschicht auf dem schüttgutartigen Material ausbildet. Die schüttgutartigen Materialien in der Trommel des Trommelcoaters sollen hierbei möglichst gleichmäßig mit dem gewünschten Film überzogen werden, wozu es unerlässlich ist, in der Trommel Mischwerkzeuge, beispielsweise Schaufeln oder dergleichen, anzuordnen. Die Ausführung und Anordnung der Mischwerkzeuge in einem Trommelcoater führt zu einer erhöhten Belastung der schüttgutartigen Materialien, was gegebenenfalls zu einer teilweisen Beschädigung oder Zerstörung des schüttgutartigen Materials führt.

Die Gebrauchsmusterschrift DE 20 2009 017 787 U1 offenbart eine Vorrichtung zum Aufbringen einer Oberflächenschicht auf Kerne mit einer drehbar gelagerten Trommel zur Aufnahme der Kerne, wobei die Trommel als länglicher Zylinder ausgestaltet ist, die größer ist als es dem Durchmesser der Trommel entspricht und wenigstens eine Sprühdüse zum Auftragen des Oberflächenmaterials auf die Kerne sowie mit einer Heizeinrichtung für den Innenraum der Trommel und einer Einlass- und einer Auslassöffnung und mit in der Trommel angeordneten und mit der Trommel verbundenen Mitnehmern für die Kerne, wobei die Mitnehmer als in der Längsachse der Trommel verlaufende, in den Trommelinnenraum ragende Vorsprünge ausgebildet sind. Nachteilig hieran ist, dass in der Trommel der Vorrichtung keine ausreichend gute Durchmischung der Kerne durch die Mitnehmer gewährleistet wird und die Kerne durch die Mitnehmer einer hohen mechanischen Belastung, z. B. in Form von Reibung oder dergleichen, ausgesetzt sind.

Die europäische Patentschrift EP 1 050 337 B1 zeigt einen Trommelcoater mit Zwangsrückführung des Gutes, wobei die Trommel zur Aufnahme des Gutes drehbar gelagert ist, wenigstens eine Sprühdüse zum Auftrag des Oberflächenmaterials auf das Gut aufweist und mit einer Heizeinrichtung zur Trocknung des Gutes und mit ersten und zweiten Mitnehmern, wobei die zweiten Mitnehmer radial versetzt zu den ersten Mitnehmer angeordnet sind. Die zweiten Mitnehmer fördern das Gut hierbei entgegengesetzt zu den ersten Mitnehmern. Nachteilig an dieser technischen Lösung ist, dass das behandelte zu durchmischende Gut einer erheblichen mechanischen Belastung durch die ersten und zweiten Mitnehmer ausgesetzt ist, was zu einer Beschädigung oder sogar zu einer Zerstörung des Gutes führen kann, wodurch die im Trommelcoater behandelte Charge unbrauchbar wird.

Die europäische Patentanmeldung EP 2 363 202 A1 offenbart eine Trommelbeschichtungsvorrichtung, mit: einer Drehtrommel, die drehbar um eine im Wesentlichen horizontale Drehachse bereitgestellt ist, und mit einem Öffnungsabschnitt, der an einem Endabschnitt in Axialrichtung ausgebildet ist und durch den die Luft in die Drehtrommel strömt; einem Gehäuse zum Aufnehmen der Drehtrommel, einer Luftzuführkammer, die in Bezug zu dem Öffnungsabschnitt der Drehtrommel auf einer vorderen Bühne bereitgestellt ist und eine Endseite aufweist, die mit dem Öffnungsabschnitt und einem Sektionsbereich in Verbindung ist, der größer als ein Sektionsbereich des Öffnungsabschnitts ist; und einem Luftzuführkanal, der mit einem Luftzuführloch verbunden ist, das auf einer anderen Endseite der Luftzuführkammer ausgebildet ist, und zwar zum Zuführen der Luft in die Luftzuführkammer, wobei die Luftzuführkammer eine Strömungsgeschwindigkeit der Luft reduziert, die von dem Luftzuführkanal in die Luftzuführkammer strömt, und dann die Luft in den Öffnungsabschnitt zuführt. Nachteilig hieran ist, dass das behandelte zu durchmischende Gut nicht optimal durchmischt und schonend wird.

Die internationale Patentanmeldung WO 2011/013537 A1 zeigt einen Tellercoater, welcher mit Mischwerkzeugen auf einer Trommel ausgestattet ist, wobei die Mischwerkzeuge zum einen in einem Winkel zur Längsachse der an der Trommel angeordnet und zum anderen einander zugeneigt sind. Nachteilig an dieser technischen Lösung ist, dass das behandelte zu durchmischende Gut nicht optimal durchmischt und schonend wird.

Der Erfindung liegt daher die Aufgabe zugrunde eine verbesserte Anordnung von Mischwerkzeugen in Trommelcoatern zur schonenden Durchmischung und/oder Homogenisierung von schüttgutartigen Materialien zu entwickeln.

Die Aufgabe wird erfindungsgemäß durch einen Trommelcoater zum Aufbringen einer Oberflächenschicht auf schüttgutartige Materialien gemäß Patentanspruch 1 gelöst.

### Die Erfindung und ihre Vorteile

Der erfindungsgemäße Trommelcoater zum Aufbringen einer Oberflächenschicht auf schüttgutartige Materialien, mit den kennzeichnenden Merkmalen des Anspruchs 1 hat demgegenüber den Vorteil, dass das das erste Mischwerkzeug zumindest teilweise auf der Innenfläche der Trommel angeordnet ist und_das mindestens eine in der Trommel angeordnete zweite Mischwerkzeug mindestens eine Öffnung auf der mindestens einen Mischfläche aufweist. Durch die mindestens eine Öffnung auf der mindestens einen Mischfläche des mindestens einen zweiten Mischwerkzeugs wird eine gegenüber einem nicht erfindungsgemäßen Trommelcoater deutlich verbesserte Durchmischung und/oder Homogenisierung des schüttgutartigen Materials erzielt. Ein weiterer großer Vorteil der mindestens einen Öffnung auf dem mindestens einen zweiten Mischwerkzeug ist, dass hierdurch die mechanische Belastung, insbesondere durch Reibung oder dergleichen, gegenüber dem zu durchmischenden schüttgutartigen Material verringert wird, so dass eine sehr schonende Behandlung des schüttgutartigen Material in der Trommel des Trommelcoaters erfolgt, wodurch die Produktqualität immens gesteigert wird. Darüber hinaus wird bei der erfindungsgemäßen Anordnung der ersten Mischwerkzeuge auf der Trommel des Trommelcoaters eine sehr gute Durchmischung des schüttgutartigen Materials innerhalb eines Beladungsbereichs (Füllgrad) von 10 % bis 100 % der Trommel des Trommelcoaters erreicht.

Nach einer vorteilhaften Ausgestaltung des erfindungsgemäßen Trommelcoaters fördert das mindestens eine zweite Mischwerkzeug das schüttgutartige Material in die gleiche Richtung wie das mindestens eine erste Mischwerkzeug. Der Stand der Technik offenbart, dass durch die Förderung der ersten Mischwerkzeuge des schüttgutartigen Materials in entgegengesetzter Richtung zur Förderung des schüttgutartigen Materials durch die zweiten Mischwerkzeuge eine verbesserte Durchmischung und/oder Homogenisierung stattfindet. Versuche haben überraschenderweise als Ergebnis gezeigt, dass in der erfindungsgemäßen Anordnung des mindestens einen ersten und mindestens einen zweiten Mischwerkzeugs, wobei das mindestens eine zweite Mischwerkzeug mindestens eine Öffnung auf der mindestens einen Mischfläche aufweist, eine nochmals verbesserte Durchmischung und/oder Homogenisierung des schüttgutartigen Materials, auch bei gleicher Förderrichtung des schüttgutartigen Materials erzielt wird.

Nach einer zusätzlichen vorteilhaften Ausgestaltung des erfindungsgemäßen Trommelcoaters ist das mindestens eine erste Mischwerkzeug schräg in Bezug auf eine Trommellängsachse in der Trommel angeordnet. Vorteilhaft an einer derartigen technischen Ausgestaltung des mindestens einen ersten Mischwerkzeugs ist, dass dadurch eine Entleerung der Trommel im Entleerungsbetrieb optimiert wird, da das mindestens eine Mischwerkzeug bei der Drehung der Trommel im Entleerungsbetrieb eine fördernde Wirkung in Richtung der Auslassöffnung auf das schüttgutartige Material hat. Eine zusätzliche positive Wirkung hat diese Anordnung des mindestens einen ersten Mischwerkzeugs, wenn die ersten Mischwerkzeuge, die in der Trommel angeordnet sind nicht über die gesamte Länge der Trommellängsachse durchgängig sind. Hierdurch wird die Durchmischung und/oder Homogenisierung des schüttgutartigen Materials nochmals verbessert. Eine weitere Verbesserung wird erzielt, wenn die ersten Mischwerkzeuge, die schräg zur Trommellängsachse in der Trommel angeordnet sind und nicht über die gesamte Länge der Trommellängsachse durchgängig sind, zumindest teilweise überlappen. Die Kombination dieser Anordnungen führt zu einer deutlich optimierten Durchmischung und/oder Homogenisierung des schüttgutartigen Materials bei gleichzeitig reduzierter mechanischer Belastung für das schüttgutartige Material und einer verbesserten Förderung des schüttgutartigen Materials bei Entleerung der Trommel.

Nach einer zusätzlichen vorteilhaften Ausgestaltung des erfindungsgemäßen Trommelcoaters ist eine Breite des mindestens einen zweiten Mischwerkzeugs größer als eine Breite des mindestens einen ersten Mischwerkzeugs. Der Vorteil an einer solchen technischen Ausgestaltung ist, dass durch ein im Gegensatz zum mindestens einen ersten Mischwerkzeug breiteres zweites Mischwerkzeug für eine verbesserte Durchmischung bei höheren Befüllmengen der Trommel des Trommelcoaters sorgt, da das mindestens eine zweite Mischwerkzeug bei einer größeren Breite weiter in das Trommelinnere ragt und somit die Durchmischung und/oder Homogenisierung verbessert.

Nach einer zusätzlichen vorteilhaften Ausgestaltung des erfindungsgemäßen Trommelcoaters ist ein Anstellwinkel der zweiten Mischwerkzeuge flacher als ein Anstellwinkel der ersten Mischwerkzeuge. Der flachere Anstellwinkel sorgt für eine verminderte Reibung des mindestens einen zweiten Mischwerkzeugs auf das schüttgutartige Material und somit für eine geringere mechanische Belastung des zu durchmischenden, behandelnden schüttgutartigen Materials, was in einer schonenderen Durchmischung des schüttgutartigen Materials resultiert.

Nach einer zusätzlichen vorteilhaften Ausgestaltung des erfindungsgemäßen Trommelcoaters weist das mindestens eine erste Mischwerkzeug mindestens eine Öffnung auf. Durch die technische Ausgestaltung des mindestens einen Mischwerkzeugs mit mindestens einer Öffnung wird die auf das schüttgutartige Material wirkende Reibung zusätzlich minimiert, so dass die Belastung, insbesondere mechanische Belastung, auf das zu durchmischende schüttgutartige Material weiter sinkt. Somit wird eine noch bessere Produktqualität erzielt.

Nach einer zusätzlichen vorteilhaften Ausgestaltung des erfindungsgemäßen Trommelcoaters ist das mindestens eine zweite Mischwerkzeug lösbar in der Trommel des Trommelcoaters angeordnet. Vorteilhaft hieran ist, dass dadurch der Trommelcoater im höchsten Maße flexibel ist. Überraschenderweise führt der Ausbau des mindestens einen zweiten Mischwerkzeugs dazu, dass sich mit einer derartigen Anordnung der ersten Mischwerkzeuge auf der Trommel des Trommelcoaters auch kleine Batches verarbeiten lassen, bei denen der Füllgrad der Trommel bei lediglich 10 % liegt. Üblicherweise ist hier ein Arbeitsbereich zwischen 30 % und 100 % Befüllmenge üblich. Vor allem für Testzwecke ist dies ein nicht zu unterschätzender Faktor. Die niedrige Füllmenge bzw. der niedrige Füllgrad lässt sich somit ohne aufwändige Umbaumaßnahmen erreichen. Zusätzlich sind die fest eingebauten ersten Mischelemente, die bei entgegengesetzter Drehrichtung der Trommel auch als Austragselemente dienen, für das gleichmäßige Durchmischen solch kleiner Batches, insbesondere an Tablettenmengen, ausreichend. Zusätzlichen kann der Trommelcoater kippbeweglich gelagert sein. Durch die Möglichkeit den Trommelcoater kippbeweglich zu lagern wird das Entleeren des in der Trommel des Trommelcoaters befindlichen schüttgutartigen Materials verbessert.

Nach einer zusätzlichen vorteilhaften Ausgestaltung des erfindungsgemäßen Trommelcoaters weist die Trommel im Bereich der Auslassöffnung mindestens einen Mitnehmer auf. Der mindestens eine zusätzliche Mitnehmer ist dergestalt an der Trommel des Trommelcoaters angeordnet, dass bei der Entleerung das schüttgutartige Material von dem mindestens einen Mitnehmer verbessert aufgenommen wird, wodurch eine noch schnellere Entleerung der Trommel erreicht wird.

Nach einer zusätzlichen vorteilhaften Ausgestaltung des erfindungsgemäßen Trommelcoaters weist der Trommelcoater einen Auslass für das schüttgutartige Material auf. Ein Auslass ist deshalb vorteilhaft, da hierdurch das schüttgutartige Material während des Entleerungsvorgangs der Trommel durch den mindestens einen zusätzlich im Bereich der Auslassöffnung angeordneten Mitnehmer kontinuierlich erfolgt und bspw. über eine an dem Auslass angeordnete flexible Leitung in einen Vorrats- bzw. Auffangbehälter überführt werden kann. Ein weiterer Vorteil ist, dass dadurch eine

Übertragung von schüttgutartigen Material von der Trommel in den Vorrats- bzw. Auffangbehälter ohne Verluste, wie beispielsweise beim Entleeren mit einem Hilfswerkzeug, z. B. einer Schaufel oder dergleichen, erfolgt.

Nach einer zusätzlichen vorteilhaften Ausgestaltung des erfindungsgemäßen Trommelcoaters ist der Auslass bei einer Drehung der Trommel im Mischbetrieb geschlossen. Vorteilhaft an dieser technischen Ausgestaltung ist, dass im Mischbetrieb des Trommelcoaters kein schüttgutartiges Material in den Auslass gelangen kann. Hierdurch wird das schüttgutartige Material im Mischbetrieb vollständig dem Misch- und Beschichtungsvorgang unterworfen und gleichzeitig verhindert, dass einzelne Tabletten in den Auslass gelangen, so dass die Anforderungen an die Produktqualität nicht erfüllt werden können. Es ist von besonderer Bedeutung dass in Trommelcoatern das gesamte schüttgutartige Material die gleiche Verweilzeit aufweist.

Das Mischwerkzeug zur Verwendung in einem Trommelcoater zur schonenden Durchmischung und/oder Homogenisierung von schüttgutartigen Materialien hat den Vorteil, dass das Mischwerkzeug mindestens zwei Mischflächen auf, wobei eine erste Mischfläche einen Winkel relativ zur einer zweiten Mischfläche aufweist. Durch die vorteilhafte Ausgestaltung der mindestens zwei Mischflächen des Mischwerkzeugs wird die mechanische Belastung auf das schüttgutartige Material bei gleichzeitig sehr hohem Durchmischungsgrad reduziert und die Produktqualität der Charge erhöht. Der Vorteil an dieser technischen Ausgestaltung des Mischwerkzeugs ist, dass durch die mindestens eine Öffnung auf der Mischfläche des Mischwerkzeugs die auf das schüttgutartige Material einwirkende mechanische Belastung miniert wird, wodurch die Produktqualität gesteigert wird.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: einen Längsschnitt durch die Trommel eines erfindungsgemäßen Trommelcoater,
- Fig. 2: eine geschnittene, perspektivische Ansicht der Trommel des erfindungsgemäßen Trommelcoaters,
- Fig. 3: einen Längsschnitt durch einen erfindungsgemäßen Trommelcoater mit detaillierter Ansicht des Auslasses,
- Fig. 4: einen Detailausschnitt A aus Fig. 3 bei geöffneter Abdeckung,
- Fig. 5: einen Detailausschnitt A aus Fig. 3 bei geschlossener Abdeckung,
- Fig. 6: eine geschnittene perspektivische Ansicht des Trommelinnenraums und des Auslasses des erfindungsgemäßen Trommelcoaters,
- Fig. 7: eine Detailansicht B der perspektivische Ansicht des Auslasses des erfindungsgemäßen Trommelcoaters bei geschlossener Abdeckung,
- Fig. 8: eine Detailansicht B der perspektivische Ansicht des Auslasses des erfindungsgemäßen Trommelcoaters bei geöffneter Abdeckung,
- Fig. 9: eine perspektivische Ansicht einer Ausführungsform des Mischwerkzeugs mit verdeckten Kanten,
- Fig. 10: eine perspektivische Ansicht einer Ausführungsform des Mischwerkzeugs mit verdeckten Kanten und
- Fig. 11: eine perspektivische Ansicht einer Ausführungsform des Mischwerkzeugs.

### Beschreibung der Ausführungsbeispiele

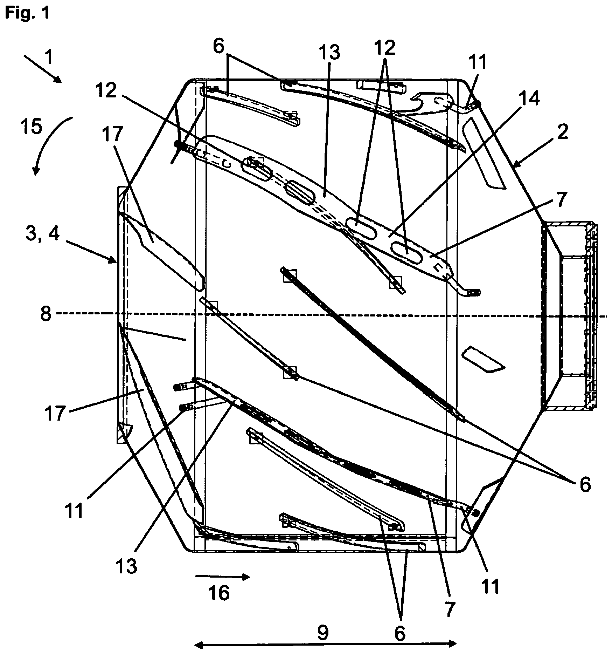

Fig. 1 zeigt an einem Ausführungsbeispiel einen Längsschnitt durch einen erfindungsgemäßen Trommelcoater 1, wobei hier nur die Trommel 2 gezeigt ist. Der Trommelcoater 1 weist eine drehbar gelagerte Trommel 2 zur Aufnahme von schüttgutartigen Materialien (nicht gezeigt) mit einer Einlassöffnung 3 und einer Auslassöffnung 4 auf. Zudem umfasst der erfindungsgemäße Trommelcoater 1 mindestens eine in Fig. 1 nicht dargestellte Sprühdüse zum Auftrag eines Oberflächenmaterials auf die schüttgutartigen Materialien und eine ebenfalls nicht in Fig. 1 gezeigte Trocknungsvorrichtung für den Trommelinnenraum 5. Die schüttgutartigen Materialien, insbesondere Tabletten, Kapseln oder sehr große Pellets, werden in Trommelcoatern 1 in dessen Trommelinnenraum 5 mit einer Schicht eines Oberflächenmaterials, vorzugsweise Zuckerüberzügen, Lacken und sogar Wirkstoffen überzogen. Hierzu werden die schüttgutartigen Materialien im Trommelinnenraum 5 gleichzeitig besprüht, vorzugsweise mit einer Lösung oder Suspension, und mit einem Fluid, insbesondere einem Gas, bspw. erwärmter Luft, getrocknet. Das Besprühen des schüttgutartigen Materials hat das Ziel eine Oberflächenschicht zu erzeugen, die entscheidenden Einfluss auf die Wirkstofffreisetzung hat. Dieses so genannte Coating erleichtert dem Patienten zudem die Einnahme der Tabletten und auch ein unangenehmer Geschmack des Wirkstoffs lässt sich durch das Coating maskieren. Die gleichzeitige Trocknung ist notwendig, damit das Lösungsmittel aus der aufgesprühten Lösung oder Suspension verdampfen kann und sich die gewünschte Oberflächenschicht auf dem schüttgutartigen Material ausbildet. Die schüttgutartigen Materialien, insbesondere Tabletten, Kapseln oder sehr große Pellets, sollen hierbei in der Trommel 2 des Trommelcoaters 1 möglichst gleichmäßig mit dem gewünschten Film überzogen werden. Dazu ist es unerlässlich, in der Trommel 2 Mischwerkzeuge 6, 7, beispielsweise Schaufeln oder dergleichen, anzuordnen. Im erfindungsgemäßen Trommelcoater 1 sind im Trommelinnenraum 5 sind erste Mischwerkzeuge 6 und zweite Mischwerkzeuge 7 angeordnet. Die zweiten Mischwerkzeuge 7 sind radial zu den ersten Mischwerkzeugen 6 versetzt angeordnet.

Im Ausführungsbeispiel des erfindungsgemäßen Trommelcoaters 1 sind auf der Innenfläche der Trommel 2 die ersten Mischwerkzeuge 6 schräg bzw. winklig in Bezug auf eine Trommellängsachse 8 angeordnet. Zudem verlaufen die ersten Mischwerkzeuge 6 in Bezug auf die Länge 9 der Trommel 2 nicht durchgängig und/oder vollständig. Hierbei überlappen die ersten Mischwerkzeuge 6 darüber hinaus zumindest teilweise über eine Länge 10 in Bezug auf die Trommellängsachse 8. Durch diese Anordnung der ersten Mischwerkzeuge 6 wird eine sehr gute Durchmischung des schüttgutartigen Materials, vorzugsweise von Tabletten, Kapseln oder sehr großen Pellets, erzielt ohne das schüttgutartige Material einer hohen mechanischen Belastung, die insbesondere durch Reibung zwischen dem schüttgutartigen Material und den ersten Mischwerkzeugen 6 erzeugt wird, auszusetzen. Zusätzlich zu den ersten Mischwerkzeugen 6 sind in der Trommel 2 des Trommelcoaters 1 zweite Mischwerkzeuge 7 angeordnet, die mittels Befestigungsmittel 11 bspw. an der Wandung der Trommel 2 angeordnet sind, wobei die zweiten Mischwerkzeuge 7 Öffnungen 12 aufweisen. Zudem weisen die zweiten Mischwerkzeuge 7 im Ausführungsbeispiel zwei Mischflächen 13 und 14 auf, die winklig zueinander angeordnet sind, wodurch die Durchmischung und Förderung des schüttgutartigen Materials beeinflusst werden kann. Es ist durchaus denkbar zweite Mischwerkzeuge 7 individuell so auszugestalten und anzuordnen, dass diese unterschiedlichste Ausrichtungen und eine unterschiedliche Anzahl an Öffnungen 12 und Mischflächen 13, 14 aufweisen. Durch die Öffnungen 12 der zweiten Mischwerkzeuge 7 wird die mechanische Belastung, die auf das schüttgutartige Material einwirkt, reduziert, so dass eine sehr schonende Behandlung des schüttgutartigen Material in der Trommel 2 des Trommelcoaters 1 erfolgt. Hierdurch wird eine noch bessere Produktqualität erzielt. Die Anstellwinkel der Mischflächen 13 und 14 sowie eine unterschiedliche Breite der Mischflächen 13, 14 zueinander oder im Vergleich zu den ersten Mischwerkzeugen 6 beeinflusst die Güte der Durchmischung und/oder Homogenisierung zusätzlich. Durch eine Ausgestaltung des erfindungsgemäßen Trommelcoaters 1 wird eine sehr gute Durchmischung des schüttgutartigen Materials im Mischbetrieb (Drehrichtung gemäß Pfeil 15) erzielt, was sich insbesondere bei niedrigen Füllgraden der Trommel 2 zeigt. Hierdurch sind überraschenderweise übergroße Spannen in Beladungsbereichen von 10 % bis 100 % der Trommel 2 des Trommelcoaters sehr gute Durchmischungs- und/oder Homogenisierungsergebnisse möglich. Im Ausführungsbeispiel des erfindungsgemäßen Trommelcoaters 1 fördern die ersten und zweiten Mischwerkzeuge 6, 7 in eine gemeinsame Förderrichtung 16, weg von der Einlass- 3 und Auslassöffnung 4. Zur Entleerung der Trommel 2 wird die Trommel 2 entgegen der Drehrichtung im Mischbetrieb gemäß Pfeil 15 gedreht (Entleerungsbetrieb). Hierbei wird durch die Anordnung der ersten und zweiten Mischwerkzeuge 6, 7 eine entgegen der Förderrichtung 16 des schüttgutartigen Materials in Richtung der Auslassöffnung 4 erzielt. Neben den ersten und zweiten Mischwerkzeugen 6, 7 sind im Innenraum der Trommel 2 im Bereich der Auslassöffnung 4 Mitnehmer 17, insbesondere Schaufeln oder dergleichen, angeordnet, die im Entleerungsbetrieb das schüttgutartige Material aus der Trommel 2 in einen nicht gezeigten Auslass, beispielsweise eine Öffnung mit einem daran angeordneten Rohrleitungsstutzen, fördern. Zudem weist der erfindungsgemäße Trommelcoater 1 eine nicht gezeigte Vorrichtung zur automatisierten Probennahme von schüttgutartigen Material aus der Trommel 2 auf.

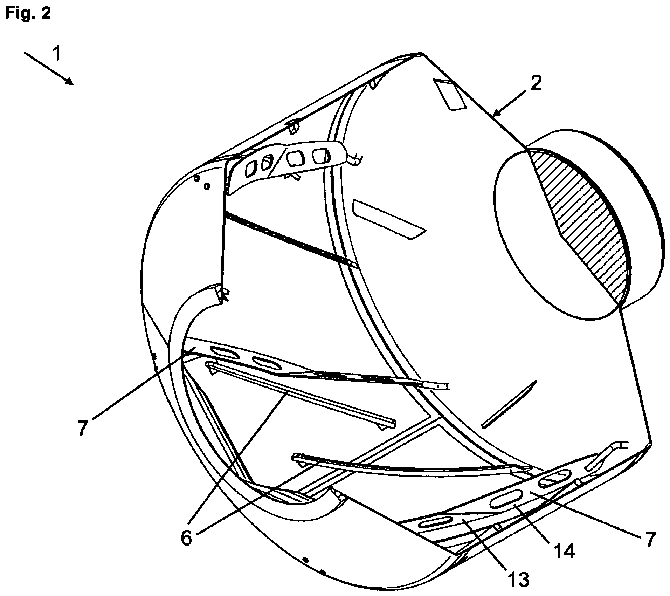

Fig. 2 zeigt eine geschnittene, perspektivische Ansicht der Trommel 2 des erfindungsgemäßen Trommelcoaters 1. Auf der Innenfläche der Trommel sind erste Mitnehmer 6 und zweite Mitnehmer 7 mit Öffnungen 12 auf deren Mischflächen 13 und 14 gezeigt.

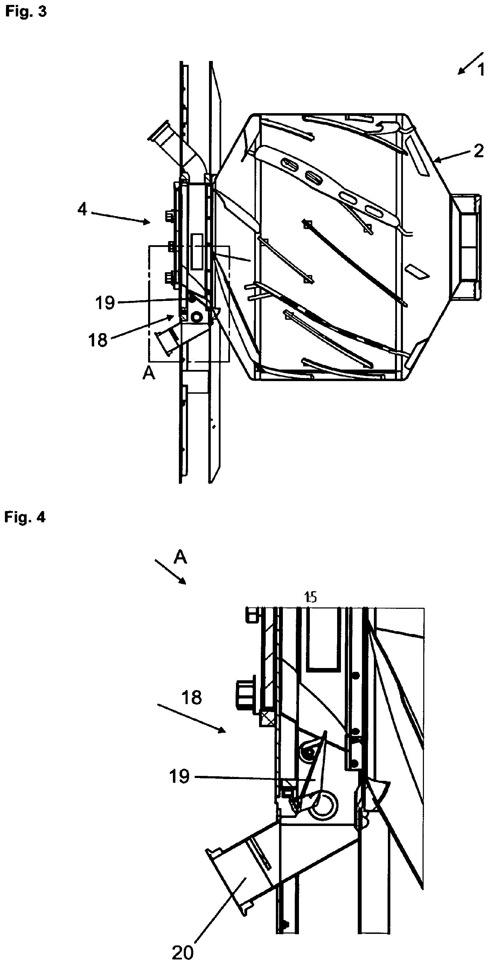

In Fig. 3 ist ein Längsschnitt durch einen erfindungsgemäßen Trommelcoater 1 mit detaillierter Ansicht des Auslasses 18 im Detailauschnitt A dargestellt. Der Auslass 18 weist eine Abdeckung 19 auf, welche im Entleerungsbetrieb zumindest teilweise geöffnet ist und welche im Mischbetrieb den Auslass 18 dicht verschließt. Im Sinne von dicht verschließen ist hier gemeint, dass im Mischbetrieb kein schüttgutartiges Material, insbesondere Tabletten, Kapseln oder dergleichen, aus der Trommel 2 in den Auslass 18 im Bereich der Auslassöffnung 4 gelangt. Dadurch wird erreicht, dass das gesamte schüttgutartige Material die gleiche Verweilzeit in der Trommel 2 des Trommelcoaters 1 aufweist und beim Entleeren kein nicht oder nur teilweise behandeltes Material aus der Trommel 2 entnommen wird.

Fig. 4 zeigt den Detailauschnitt A aus Fig. 3, wobei die Abdeckung 19 des Auslasses 18 geöffnet ist. Durch die geöffnete Abdeckung 19 wird ein am Auslass 18 angeordneter Stutzen 20 freigeben, so dass im Entleerungsbetrieb der Trommel 2 des Trommelcoaters 1 das schüttgutartige Material zum Beispiel in einen hier nicht gezeigten Behälter gefördert werden kann, ohne dass behandeltes Gut verloren geht.

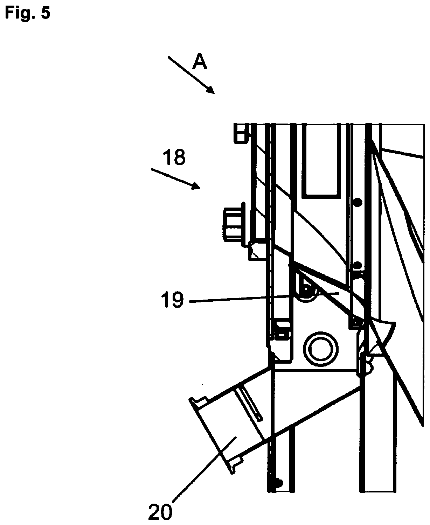

In Fig. 5 ist der Detailauschnitt A aus Fig. 3 dargestellt, wobei die Abdeckung 19 des Auslasses 18 geschlossen ist. Durch die geschlossene Abdeckung 19 wird ein am Auslass 18 angeordneter Stutzen 20 verschlossen, so dass im Mischbetrieb der Trommel 2 des Trommelcoaters 1 das schüttgutartige Material in der Trommel 2 des Trommelcoaters 1 bleibt und dort das gesamte schüttgutartige Material eine gleiche Verweilzeit aufweist, so dass das schüttgutartige Material gleichmäßig behandelt ist.

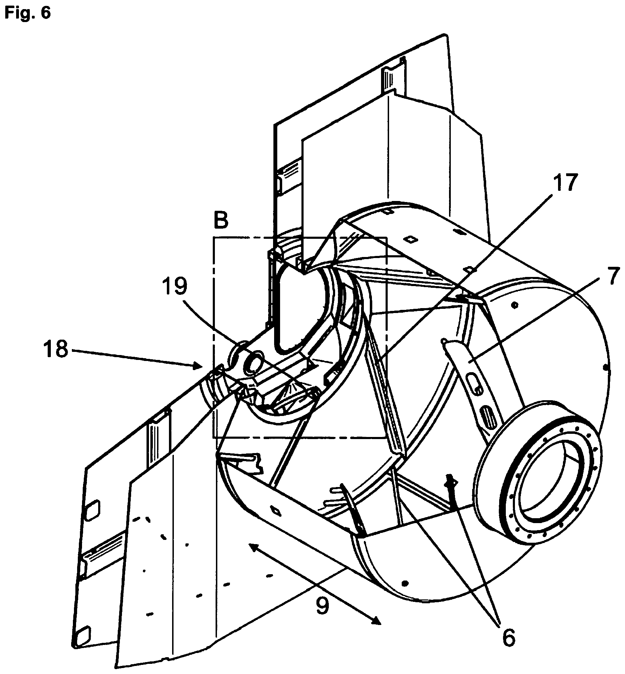

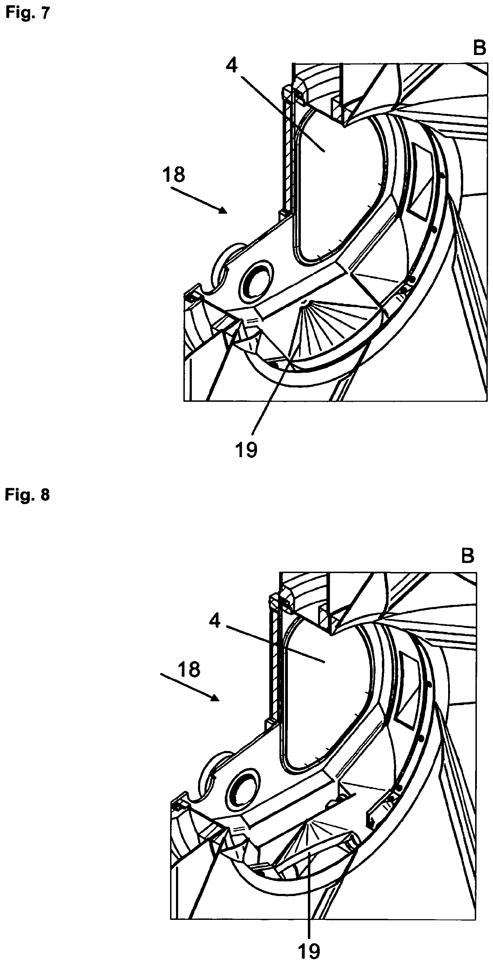

In Fig. 6 wird eine perspektivische Ansicht des Trommelinnenraums 5 der Trommel 2 und des Auslasses 18 des erfindungsgemäßen Trommelcoaters 1 dargestellt. Die mit Öffnungen perforierte Trommel 2 weist erste und zweite Mischwerkzeuge 6, 7 auf. Durch die nicht gezeigten Öffnungen der Trommel 2 wird ein Fluid, insbesondere ein Gas, vorzugsweise erwärmte Luft, in den Trommelinnenraum 5 geführt, die das zu durchmischende bzw. homogenisierende schüttgutartige Material trocknet. Die ersten Mischwerkzeuge 6 sind versetzt zueinander, teilweise überlappend und in Bezug auf die Länge 9 der Trommel 2 nicht durchgängig auf der Trommelinnenfläche der Trommel 2 angeordnet. Die zweiten Mischwerkzeuge 7 sind radial zu den ersten Mischwerkzeugen 6 hin zur Rotationsachse der Trommel 2 versetzt. Hierdurch wird die Durchmischung und/oder Homogenisierung des schüttgutartigen Materials Im Vergleich mit nur im Trommelinnenraum 5 angeordneten ersten Mischwerkzeugen 6 deutlich verbessert. Zudem ist ein Mitnehmer 17 zur verbesserten Entleerung der Trommel 2 im Bereich einer Auslassöffnung 4 angeordnet. Der Mitnehmer 17 fördert im Entleerungsbetrieb schüttgutartiges Material in den Auslass 18 im Bereich der Auslassöffnung 4 des Trommelcoaters 1 und dient somit für einen optimierten Entleerungsprozess. Der Detailausschnitt B des Auslasses 18 ist in den folgenden Fig. 7 und 8 dargestellt.

In den Fign. 7 und 8 ist jeweils eine Detailansicht B der perspektivischen Ansicht des Auslasses 18 des erfindungsgemäßen Trommelcoaters 1 bei geschlossener bzw. geöffneter Abdeckung 19 dargestellt. Die Abdeckung 19 klappt im geöffneten Zustand nach unten und gibt dem schüttgutartigen Material im Entleerungsbetrieb der Trommel 2 des Trommelcoaters 1 den Auslass 18 frei. Im Gegensatz dazu verschließt die Abdeckung 19 den Auslass 18 dicht, sobald sich der Trommelcoater 1 im Mischbetrieb befindet.

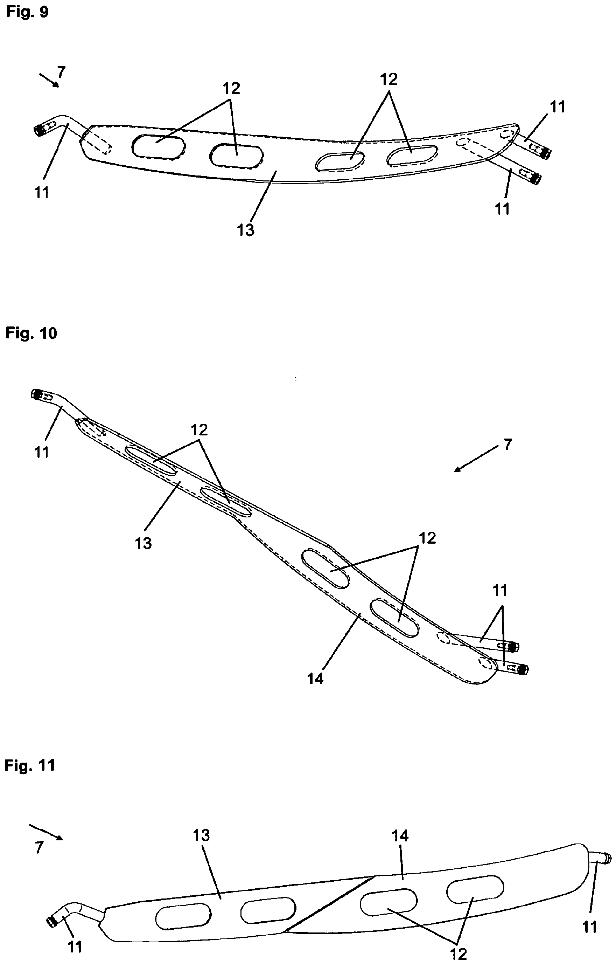

In den Fign. 9, 10 und 11 ist eine perspektivische Ansicht einer Ausführungsform des Mischwerkzeugs 7 gezeigt. Das Mischwerkzeug 7 weist in der Fig. 9 eine einzige Mischfläche 13 auf. Im Gegensatz hierzu weisen die Mischwerkzeuge 7 in den Fign. 10 und 11 zwei Mischflächen 13 und 14 auf. Die Mischflächen 13, 14 weisen mindestens zwei darin angeordnete Öffnungen 12 auf. Die beiden Mischflächen 13, 14 in den Fign. 10 und 11 sind zueinander winklig angeordnet, so dass diese in der Trommel 2 in Bezug auf ein erstes Mischwerkzeug 6 unterschiedliche Anstellwinkel besitzen. Hierdurch wird zum einen die Durchmischung und/oder Homogenisierung verbessert und zum anderen wird die durch das Mischwerkzeug 7 ausgeübte mechanische Belastung auf das schüttgutartige Material reduziert. Die Mischfläche 13 in der Fig. 9 ist dagegen lediglich gekrümmt.

### Bezugszahlenliste

- 1: Trommelcoater
- 2: Trommel
- 3: Einlassöffnung
- 4: Auslassöffnung
- 5: Trommelinnenraum
- 6: erstes Mischwerkzeug
- 7: zweites Mischwerkzeug
- 8: Trommellängsachse
- 9: Länge
- 10: Länge
- 11: Befestigungsmittel
- 12: Öffnung
- 13: Mischfläche
- 14: Mischfläche
- 15: Pfeil
- 16: Förderrichtung
- 17: Mitnehmer
- 18: Auslass
- 19: Abdeckung
- 20: Stutzen

## Patentansprüche

1. Trommelcoater (1) zum Aufbringen einer Oberflächenschicht auf schüttgutartige Materialien umfassend,
- eine drehbar gelagerte Trommel (2) zur Aufnahme von schüttgutartigen Materialien,
- eine Einlass- (3) und eine Auslassöffnung (4),
- mindestens eine Sprühdüse zum Auftrag des Oberflächenmaterials auf die schüttgutartigen Materialien,
- eine Trocknungsvorrichtung für einen Trommelinnenraum (5),
- mindestens ein in der Trommel (2) angeordnetes und in den Trommelinnenraum (5) hineinragendes erstes Mischwerkzeug (6), wobei das erste Mischwerkzeug (6) zumindest teilweise auf der Innenfläche der Trommel angeordnet ist,
**dadurch gekennzeichnet, dass**
- mindestens ein in der Trommel (2) angeordnetes zweites Mischwerkzeug (7), radial versetzt zu dem mindestens einen ersten Mischwerkzeug (6) angeordnet ist und mindestens eine Mischfläche (13, 14) aufweist, und
- das mindestens eine in der Trommel (2) angeordnete zweite Mischwerkzeug (7) mindestens eine Öffnung (12) auf der mindestens einen Mischfläche (13, 14) aufweist.

2. Trommelcoater (1) nach Anspruch 1,
**dadurch gekennzeichnet, dass**
das mindestens eine zweite Mischwerkzeug (7) das schüttgutartige Material in die gleiche Richtung fördert wie das mindestens eine erste Mischwerkzeug (6).

3. Trommelcoater (1) nach einem der Ansprüche 1 oder 2,
**dadurch gekennzeichnet, dass**
das mindestens eine erste Mischwerkzeug (6) schräg in Bezug auf eine Trommellängsachse (8) in der Trommel (2) angeordnet ist.

4. Trommelcoater (1) nach einem der vorhergehenden Ansprüche,
**dadurch gekennzeichnet, dass**
eine Breite des mindestens einen zweiten Mischwerkzeugs (7) größer ist als eine Breite des mindestens einen ersten Mischwerkzeugs (6).

5. Trommelcoater (1) nach einem der vorhergehenden Ansprüche,
**dadurch gekennzeichnet, dass**
ein Anstellwinkel der zweiten Mischwerkzeuge (7) flacher ist als ein Anstellwinkel der ersten Mischwerkzeuge (6).

6. Trommelcoater (1) nach einem der vorhergehenden Ansprüche,
**dadurch gekennzeichnet, dass**
das mindestens eine erste Mischwerkzeug (6) mindestens eine Öffnung aufweist.

7. Trommelcoater (1) nach einem der vorhergehenden Ansprüche,
**dadurch gekennzeichnet, dass**
das mindestens eine zweite Mischwerkzeug (7) lösbar in der Trommel (2) des Trommelcoaters (1) angeordnet ist.

8. Trommelcoater (1) nach einem der vorhergehenden Ansprüche,
**dadurch gekennzeichnet, dass**
die Trommel (2) im Bereich der Auslassöffnung (4) mindestens einen Mitnehmer (17) aufweist.

9. Trommelcoater (1) nach einem der vorhergehenden Ansprüche,
**dadurch gekennzeichnet, dass**
der Trommelcoater (1) einen Auslass (18) für das schüttgutartige Material aufweist.

10. Trommelcoater (1) nach Anspruch 9,
**dadurch gekennzeichnet, dass**
der Auslass (18) bei einer Drehung der Trommel (2) im Mischbetrieb geschlossen ist.

## Claims

1. Drum coater (1) for the application of a surface coating to materials of a bulk goods nature, comprising
- a rotatably mounted drum (2) for the holding of materials of a bulk goods nature
- an inlet- (3) and an outlet opening (4)
- at least one spray nozzle for the application of the surface material to the materials of a bulk goods nature
- a drying device for the drum interior (5)
- at least one first mixing tool (6) mounted in the drum (2) and extending into the drum interior (5), wherein the first mixing tool (6) is at least partly mounted on the inner face of the drum,
**characterised in that**
- at least one second mixing tool (7) mounted in the drum (2) is radially offset to the first mixing tool or tools (6) and has at least one mixing surface (13, 14)
- at least one second mixing tool (7) mounted in the drum (2) has at least one opening (12) on the mixing surface or surfaces (13, 14).

2. Drum coater (1) according to claim 1,
**characterised in that**
the second mixing tool or tools (7) conveys or convey the material of a bulk goods nature in the same direction as the first mixing tool or tools (6).

3. Drum coater (1) according to any of claims 1 or 2,
**characterised in that**
at least one first mixing tool (6) is arranged in the drum (2) at an angle to the drum longitudinal axis (8).

4. Drum coater (1) according to any of the preceding claims,
**characterised in that**
a width of the second mixing tool or tools (7) is greater than a width of the first mixing tool or tools (6).

5. Drum coater (1) according to any of the preceding claims,
**characterised in that**
an angle of incidence of the second mixing tools (7) is flatter than an angle of incidence of the first mixing tools (6).

6. Drum coater (1) according to any of the preceding claims,
**characterised in that**
the first mixing tool or tools (6) has or have at least one opening.

7. Drum coater (1) according to any of the preceding claims,
**characterised in that**
the second mixing tool or tools (7) is or are mounted releasably in the drum (2) of the drum coater (1).

8. Drum coater (1) according to any of the preceding claims,
**characterised in that**
the drum (2) has at least one driver (17) in the area of the outlet opening (4).

9. Drum coater (1) according to any of the preceding claims,
**characterised in that**
the drum coater (1) has an outlet (18) for the material of a bulk goods nature.

10. Drum coater (1) according claim 9,
**characterised in that**
the outlet (18) is closed during rotation of the drum (2) in mixing operation.

## Revendications

1. Machine à enduire à tambour (1) servant à appliquer une couche superficielle sur des matériaux de type produits en vrac, comprenant
- un tambour (2) monté de manière à pouvoir tourner, servant à recevoir des matériaux de type produits en vrac,
- une ouverture d'entrée (3) et une ouverture de sortie (4),
- au moins une buse de pulvérisation servant à appliquer le matériau de surface sur les matériaux de type produits en vrac,
- un dispositif de séchage pour un espace intérieur de tambour (5),
- au moins un premier outil de mélange (6) disposé dans le tambour (2) et dépassant dans l'espace intérieur de tambour (5), dans lequel le premier outil de mélange (6) est disposé au moins en partie sur la surface intérieure du tambour,
**caractérisée en ce que**
- au moins un deuxième outil de mélange (7) disposé dans le tambour (2) est disposé de manière radialement décalée par rapport à l'au moins un premier outil de mélange (6) et présente au moins une surface de mélange (13, 14),
et
- l'au moins un deuxième outil de mélange (7) disposé dans le tambour (2) présente au moins une ouverture (12) sur l'au moins une surface de mélange (13, 14).

2. Machine à enduire à tambour (1) selon la revendication 1,
**caractérisée en ce que**
l'au moins un deuxième outil de mélange (7) convoie le matériau de type produit en vrac dans la même direction que l'au moins un premier outil de mélange (6).

3. Machine à enduire à tambour (1) selon l'une quelconque des revendications 1 ou 2,
**caractérisée en ce que**
l'au moins un premier outil de mélange (6) est disposé de manière oblique par rapport à un axe longitudinal de tambour (8) dans le tambour (2).

4. Machine à enduire à tambour (1) selon l'une quelconque des revendications précédentes,
**caractérisée en ce que**
une largeur de l'au moins un deuxième outil de mélange (7) est plus grande qu'une largeur de l'au moins un premier outil de mélange (6).

5. Machine à enduire à tambour (1) selon l'une quelconque des revendications précédentes,
**caractérisée en ce que**
un angle d'attaque des deuxièmes outils de mélange (7) est plus plat qu'un angle d'attaque des premiers outils de mélange (6).

6. Machine à enduire à tambour (1) selon l'une quelconque des revendications précédentes,
**caractérisée en ce que**
l'au moins un premier outil de mélange (6) présente au moins une ouverture.

7. Machine à enduire à tambour (1) selon l'une quelconque des revendications précédentes,
**caractérisée en ce que**
l'au moins un deuxième outil de mélange (7) est disposé de manière amovible dans le tambour (2) de la machine à enduire à tambour (1).

8. Machine à enduire à tambour (1) selon l'une quelconque des revendications précédentes,
**caractérisée en ce que**
le tambour (2) présente dans la zone de l'ouverture de sortie (4) au moins un entraîneur (17).

9. Machine à enduire à tambour (1) selon l'une quelconque des revendications précédentes,
**caractérisée en ce que**
la machine à enduire à tambour (1) présente une sortie (18) pour le matériau de type produit en vrac.

10. Machine à enduire à tambour (1) selon la revendication 9,
**caractérisée en ce que**
la sortie (18) est fermée lors d'une rotation du tambour (2) dans le mode de mélange.
